# EUROPÄISCHE PATENTSCHRIFT

(11) **EP 2 146 156 B1**
(45) Veröffentlichungstag und Bekanntmachung des Hinweises auf die Patenterteilung: **18.03.2015**
(21) Anmeldenummer: 08169217.0
(22) Anmeldetag: 17.11.2008
(51) Int. Cl.: F24F 11/047

(54) **Druckstoßklappe**
Surge flap
Clapet de saute de pression

(30) Priorität: 16.07.2008 DE 102008040462
(43) Veröffentlichungstag der Anmeldung: 20.01.2010
(73) Patentinhaber: Sommer Metallbau-Stahlbau GmbH & Co. KG, 95182 Döhlau (DE)
(72) Erfinder: Sommer, Oliver, 95028, Hof (DE); Hautmann, Dieter, 95126, Schwarzenbach (DE)
(74) Vertreter: Isarpatent

(56) Entgegenhaltungen:
- EP-A- 0 656 513
- DE-A1- 1 473 140
- DE-A1-102006 053 208
- DE-U1- 8 711 749

## Beschreibung

Die Erfindung betrifft eine Druckstoßklappe, insbesondere zum Einsatz in Gebäudewandöffnungen.

In sicherheitsrelevanten Gebäuden sind in Außenwänden Öffnungen vorgesehen, die beispielsweise für Frischluftzufuhr von außen und Abluftauslass von innen dienen. Diese Öffnungen befinden sich meistens im Anschluss zu nachgelagerten Filtern, Lüftungsanlagen, Heiz- oder Kühleinrichtungen oder dergleichen. Beim Auftritt von Druckwellen von außen werden die den Öffnungen nachgeschalteten Geräte je nach Stärke der Druckwelle beschädigt oder sogar unbrauchbar. Wenn die Öffnungen der Frischluftversorgung für im Innenraum des Gebäudes befindliche Personen dienen und durch die Beschädigung von Filtern, Lüftungsanlagen oder dergleichen ausfallen, kann dies zu gesundheitlichen Schäden der im Innenraum befindlichen Personen führen. Wenn derartige Öffnungen beispielsweise für das Abführen von Abgasen von Dieselmaschinen für Stromerzeugung dienen, kann das Auftreten einer Druckwelle dazu führen, dass die Dieselmaschinen ausfallen und die Stromerzeugung unterbrochen wird. Zur Vermeidung der vorstehend geschilderten Nachteile werden in Gebäudeöffnungen so genannte Druckstoßklappen eingesetzt, die bei Auftreten einer Druckwelle die Fortpflanzung der Druckwelle in das Gebäudeinnere verhindern. Druckwellen verhalten sich pulsierend mit einem relativ steilen Anstieg innerhalb von ca. 0,3 Sekunden auf ca. 0,5 bar und mehr. Eine Druckwelle wird durch die Gebäudewände reflektiert und erzeugt anschließend einen Unterdruck von ca. 50% des Überdrucks, wonach die Druckwelle amplitudenartig von plus ins minus fallend bis zum Ruhezustand abklingt.

In der DE 913733 ist eine Verschlussklappe für gasgeschützte Belüftungsanlagen beschrieben, die eine zwischen zwei Öffnungen befindliche Verschlussklappe enthält, welche durch eine Sperreinrichtung in einem Offenzustand gehalten wird und erst nach Auslösung der Sperreinrichtung mittels einer Sprengpatrone in den Verschlusszustand verschwenkt wird. Hierbei ist die Verschlussklappe nur in einer Strömungsrichtung aktiv.

Aus dem DE 82 08 932 U1 ist eine Druckwellenschutzklappe für Kanäle von Lüftungs- und Klimaanlagen bekannt, die eine Vielzahl von Lamellen aufweist, welche über einer bestimmten Luftgeschwindigkeit gegen eine Federkraft in einen die Luftströmung blockierenden Zustand verlagert werden. Diese Druckwellenschutzklappe sperrt einen Luftstrom nur in einer Richtung.

Eine weitere Anordnung gemäß dem Oberbegriff von Anspruch 1 ist aus der Druckschrift DE 1473140 bekannt.

Der Erfindung liegt die Aufgabe zugrunde, eine Druckstoßklappe zu schaffen, die mindestens einseitig, vorzugsweise zweiseitig wirksam ist.

Diese Aufgabe wird mit einer Druckstoßklappe gemäß Anspruch 1 gelöst.

Bei einer weiteren Ausführungsform sind die Öffnungen im Gehäuse vorteilhafterweise schlitzförmig ausgebildet. Bei einer weiteren Ausführungsform ist die Verschlusseinrichtung als zylindrischer oder elliptischer Ventilkörper ausgebildet, wobei nach einer weiteren Ausführungsform die Verschlusseinrichtung mindestens zwei gekrümmte, den Öffnungen im Gehäuse zugeordnete Flächen aufweist.

Die Öffnungen, vorzugsweise die schlitzförmigen Öffnungen in den Gehäusewandungen, sind vorteilhafterweise über eine Länge vorgesehen, die kürzer ist als die axiale Länge der betreffenden Verschlusseinrichtung. Bei einer Ausführungsform ist die Höhe der Öffnungen in den Gehäusewandungen kleiner als die Höhe bzw. der Durchmesser der Verschlusseinrichtung gewählt.

Die Verschlusseinrichtung in Form eines elliptischen oder kreisförmigen Ventilkörpers weist stirnseitig mittig Befestigungsbolzen auf, die jeweils mit einem Ende der Pendelstange in Eingriff stehen.

Bei einer Ausführungsform ist vorgesehen, dass der Bewegungsweg der Verschlusseinrichtung zum Verschließen der Öffnungen auf einem Kreisbogen liegt.

Zum luftdichten Abschluss zwischen Gehäuse bzw. den schlitzförmigen Öffnungen in den Gehäusewandungen einerseits und der Verschlusseinrichtung andererseits sind entlang der Kanten der schlitzförmigen Öffnungen Dichtungsbänder angeordnet.

Die Druckstoßklappen können sowohl übereinanderliegende als auch seriell nebeneinanderliegend in mehrfacher Form vorgesehen sein.

Die erfindungsgemäße Druckstoßklappe besteht aus einem Gehäuse mit in einander gegenüberliegenden Gehäusewandungen befindlichen Öffnungen, vorzugsweise schlitzförmigen Öffnungen, zwischen welchen innerhalb des Gehäuses eine Verschlusseinrichtung angeordnet ist, vorzugsweise in Form eines Ventilkörpers, der zumindest gekrümmte Seitenwände aufweist, die bei einer Verlagerung des Ventilkörpers in Richtung auf eine der schlitzförmigen Öffnungen die schlitzförmige Öffnung dichtend abschließen können. Durch die gekrümmte Form der Verschlusseinrichtung wird ein dichtender Verschluss der Öffnungen, vorzugsweise schlitzförmigen Öffnungen, gewährleistet, sobald eine Druckwelle auftritt oder ein Unterdruck infolge der Reflexion der Druckwelle erzeugt wird.

Die erfindungsgemäße Druckstoßklappe weist gemäß einer bevorzugten Ausführungsform einen Ventilkörper mit kreisförmiger oder elliptischer Außenfläche auf, die zur Anlage an die seitlichen Öffnungen konzipiert ist. Die Verschlusseinrichtung ist durch Pendelstangen innerhalb des Gehäuses gelagert, so dass abhängig vom Auftritt einer Druckwelle oder von der Erzeugung eines Unterdrucks die Verschlusseinrichtung in der jeweiligen Richtung auf die betreffende Öffnung zu verlagerbar ist, um einen dichten Abschluss der jeweiligen Öffnung zu gewährleisten. Auf diese Weise wird sowohl ein Durchtritt einer Druckwelle in das Gebäudeinnere als auch die Auswirkung eines Unterdrucks außerhalb der Gebäudewandung auf das Gebäudeinnere hin unterbunden.

Nachfolgend werden bevorzugte Ausführungsformen der Druckstoßklappe anhand der Zeichnungen näher erläutert.

Es zeigen:
- Fig. 1: eine Schnittansicht zur Veranschaulichung einer bevorzugten Ausgestaltung einer Druckstoßklappe,
- Fig. 2: eine Teildarstellung gemäß Fig. 1 zur Erläuterung der Funktion der Druckstoßklappe,
- Fig. 3: eine horizontale Schnittansicht durch die nebeneinander angeordneten Druckstoßklappen,
- Fig. 4: eine vertikale Teilansicht der nebeneinanderliegend angeordneten Druckstoßklappen, und
- Fig. 5: eine horizontale Schnittansicht entsprechend Fig. 2.

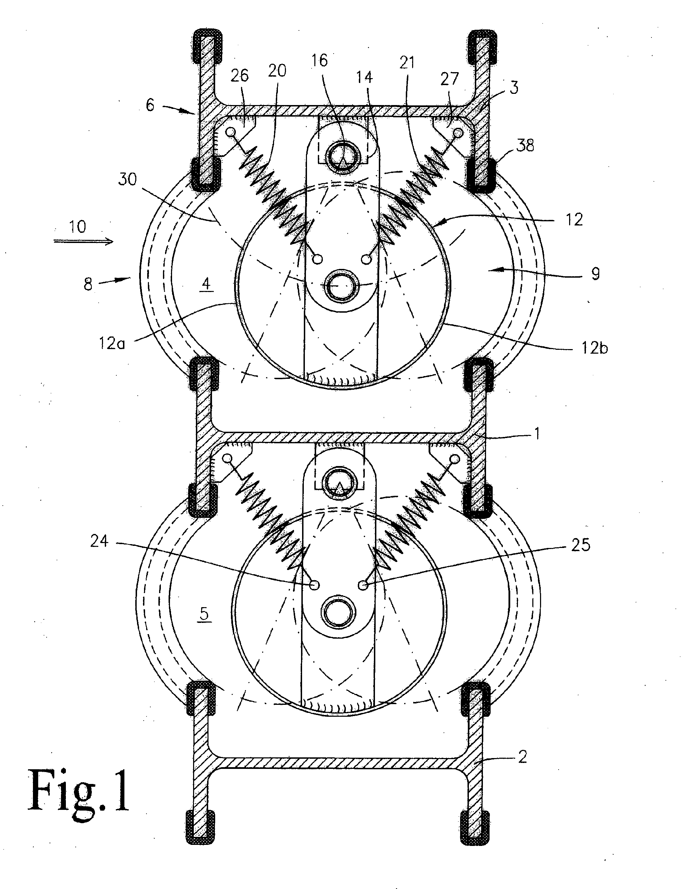

Fig. 1 zeigt eine vertikale Schnittansicht durch zwei übereinanderliegende Druckstoßklappeneinheiten, die innerhalb eines Gebäudes entweder hinter einer Gebäudeöffnung oder innerhalb einer Gebäudeöffnung liegend angeordnet sind. Das Gehäuse der Druckstoßklappe bzw. der Druckstoßklappen besteht gemäß Fig. 1 aus einem Doppel-T-Rahmen 1, 2 mit einem an der Oberseite befindlichen, im Wesentlichen Doppel-T-Rahmen 3. Durch die Verwendung von Doppel-T-Rahmen 1, 2 kann die Zahl der Druckstoßklappen auf eine beliebige Zahl erhöht werden, ohne dass jede Druckstoßklappe ein eigenes Gehäuse aufweisen muss. Bei der dargestellten Ausführungsform sind die beiden Druckstoßklappen 4, 5 übereinanderliegend vorgesehen.

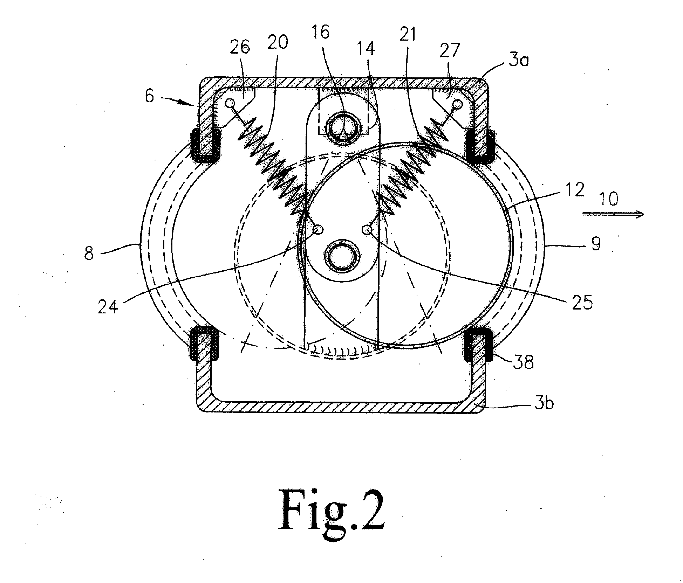

Anstelle einer Mehrfachanordnung von Druckstoßklappen 4, 5 kann auch eine einzige Druckstoßklappe in einer Gebäudeöffnung oder anschließend an eine Gebäudeöffnung vorgesehen sein, die im Wesentlichen durch zwei U-förmige Rahmen gebildet ist, wie dies durch den U-förmigen Rahmen 3a, 3b in Fig. 2 gezeigt ist.

Das durch die Rahmen 3, 1 gebildete Gehäuse ist in Fig. 1 mit 6 bezeichnet.

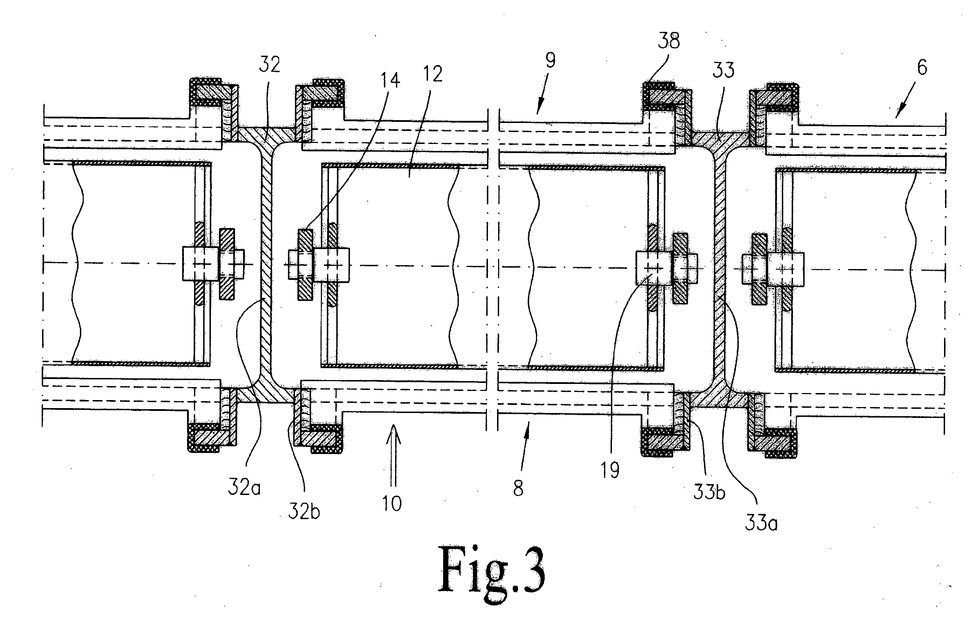

In dem Gehäuse 6 sind seitliche Öffnungen 8, 9 vorgesehen, die vorteilhafterweise schlitzförmig ausgebildet sind, wobei eine Öffnung 9 zur Gebäudeaußenseite und die andere Öffnung 8 zur Gebäudeinnenseite gerichtet ist. Insgesamt hat das Gehäuse 6 entsprechend Fig. 3 längliche Gestalt und liegt quer zu der in Fig. 3 mit 10 bezeichneten Strömungsrichtung, wobei der Pfeil 10 die Strömung einer Abluft veranschaulichen kann.

Die erfindungsgemäße Druckstoßklappe beinhaltet eine Verschlusseinrichtung 12, vorzugsweise einen Ventilkörper mit kreisförmigem Querschnitt oder elliptischem Querschnitt, wobei der Ventilkörper 12 zumindest derart ausgebildet ist, dass seine beiden zu den Öffnungen 8, 9 gewandten Flächen gekrümmt sind. Die Krümmung des Ventilkörpers 12 der zu den Öffnungen 8, 9 gewandten Flächen 12a, 12b gewährleistet, dass die betreffende Öffnung 8 komplett verschlossen wird, indem sich die gekrümmte Fläche 12a an die Öffnung 8 anschmiegt und diese luftdicht abschließt.

Die Verschlusseinrichtung 12 in Form eines Ventilkörpers hat somit im Wesentlichen die Form eines Rohres mit kreisrunder, elliptischer oder entsprechend gekrümmter Form und erstreckt sich entsprechend den Darstellungen nach Fig. 1, 3 bis 5 innerhalb des Gehäuses 6 in Axialrichtung des Gehäuses 6. Zur Lagerung der Verschlusseinrichtung 12 innerhalb des Gehäuses 6 dienen bei der dargestellten Ausführungsform zwei Pendelstangen 14, 15, die am stirnseitigen Ende des Gehäuses durch Befestigungsmittel 16 (Fig. 1) am Gehäuse angelenkt sind. Jede Pendelstange 14, 15 weist ferner ein Ende mit einer Öffnung 18 auf, in die ein Bolzen 19 eingreift, der stirnseitig und mittig von der Verschlusseinrichtung 12 absteht.

Damit ist die Verschlusseinrichtung 12 in Form eines Ventilkörpers, vorzugsweise in Form eines zylindrischen Ventilkörpers, innerhalb des Gehäuses 6 schwenkbar gelagert. Um den Ventilkörper mittig innerhalb des Gehäuses 6 zu halten, ist jede Pendelstange 14, 15 durch Federeinrichtungen gegenüber dem Gehäuse 6 fixiert. Die Federeinrichtungen sind in Fig. 1 hinsichtlich der Druckstoßklappe 4 mit 20, 21 bezeichnet.

Bei der dargestellten Ausführungsform sind als Federeinrichtungen 20, 21 Zugfedern vorgesehen, die mit einem Ende in eine Bohrung 24 bzw. 25 im unteren Bereich der jeweiligen Pendelstange 14, 15 eingesetzt sind und mit dem anderen Ende im oberen Bereich des Gehäuses, vorzugsweise im oberen Rahmen 3, eingesetzt sind, zu welchem Zweck dort Befestigungslaschen 26, 27 vorgesehen sind. Die Federeinrichtungen 20, 21, vorzugsweise in Form von Zugfedern, bilden somit gegenüber dem jeweiligen Rahmen 1, 2 unter Einbeziehung der Pendelstange 14 eine Kraftverteilung, die durch ein V festgelegt ist und dazu dient, die Verschlusseinrichtung im Ruhezustand mittig innerhalb des Gehäuses entsprechend Fig. 1 zu halten, aber eine Schwenkbewegung über einen Bogen 30 zuzulassen, wenn entsprechende Druckwerte auftreten. Bei der dargestellten Ausführungsform sind die Kräfte der beiden Zugfedern 20, 21 gleich groß gewählt, um die Verschlusseinrichtung 12 mittig innerhalb des Gehäuses 6 zu halten, wie dies in Fig. 1 gezeigt ist. Die Bahn 30 ist dabei in Bezug auf die vorzugsweise schlitzförmigen Öffnungen 8, 9 so ausgelegt, dass die Verschlusseinrichtung 12 entsprechend der Darstellung nach Fig. 2 voll auf der Öffnung 8 oder 9 aufsitzen kann, so bald entsprechend hohe Druckwerte auftreten. Entsprechend ist auch die Zugkraft der Federn 20, 21 auszulegen, d.h. dass ein Verstellen der Verschlusseinrichtung 12 in Richtung auf eine der Öffnungen 8 oder 9 bei z.B. einem Druckwert von 0,2 bar gewährleistet ist.

Abhängig von den auftretenden Druckwerten kann damit die vorzugsweise zylindrische Verschlusseinrichtung 12 eine Pendelbewegung aus dem Ruhezustand nach Fig. 1 in Richtung auf die Öffnung 8 entsprechend Fig. 2 ausführen, um die Öffnung 9 luftdicht abzuschließen. Dieser Fall tritt dann auf, wenn ein Unterdruck auf der Seite der Öffnung 9 auftritt und die Verschlusseinrichtung 12 beaufschlagt, so dass die Verschlusseinrichtung 12 eine Bewegung um die Achse der Pendelstange 14 ausführt.

Gemäß einer weiteren Ausführungsform kann die Verschlusseinrichtung 12 in und entgegengesetzt zur Richtung des Pfeiles 10 verschiebbar gelagert sein, beispielsweise durch stirnseitig an der Verschlusseinrichtung 12 angeordnete Schienen, so dass sie eine gerade Bewegung zwischen den Öffnungen 8 und 9 ausführt im Gegensatz zu einer bogenförmigen Bewegung bei Verwendung von Pendelstangen. Auch bei dieser Ausführungsform wird die Verschlusseinrichtung mittels Federeinrichtungen 26, 27 so vorgespannt, dass im Ruhezustand, d.h. bei nicht auftretenden Druckwerten, die Verschlusseinrichtung 12 mittig im Gehäuse 6 ruht.

Die Darstellung nach Fig. 2 zeigt eine einzige Druckstoßklappe mit einem Gehäuse 6, welches im Wesentlichen aus einem oberen und einem unteren U-förmigen Rahmen 3a, 3b besteht, zwischen welchen über einen vorgegebenen Bereich die schlitzförmigen Öffnungen 8, 9 ausgebildet sind.

Unter Bezugnahme auf die Fig. 3 bis 5 werden weitere Einzelheiten der erfindungsgemäßen Druckstoßklappe erläutert.

Fig. 3 zeigt eine horizontale Schnittansicht von Druckstoßklappen entsprechend Fig. 1 und zeigt deutlich die schlitzförmigen Öffnungen 8, 9, die eine kürzere Länge haben im Verhältnis zur Länge der zylindrischen Verschlusseinrichtung 12. Vorteilhaft ist, wenn sich die zylindrische Verschlusseinrichtung 12 seitlich über die schlitzförmigen Öffnungen 8, 9 hinaus erstreckt, wodurch eine sichere Abdichtung der schlitzförmigen Öffnungen 8, 9 im Druckfalle gewährleistet ist.

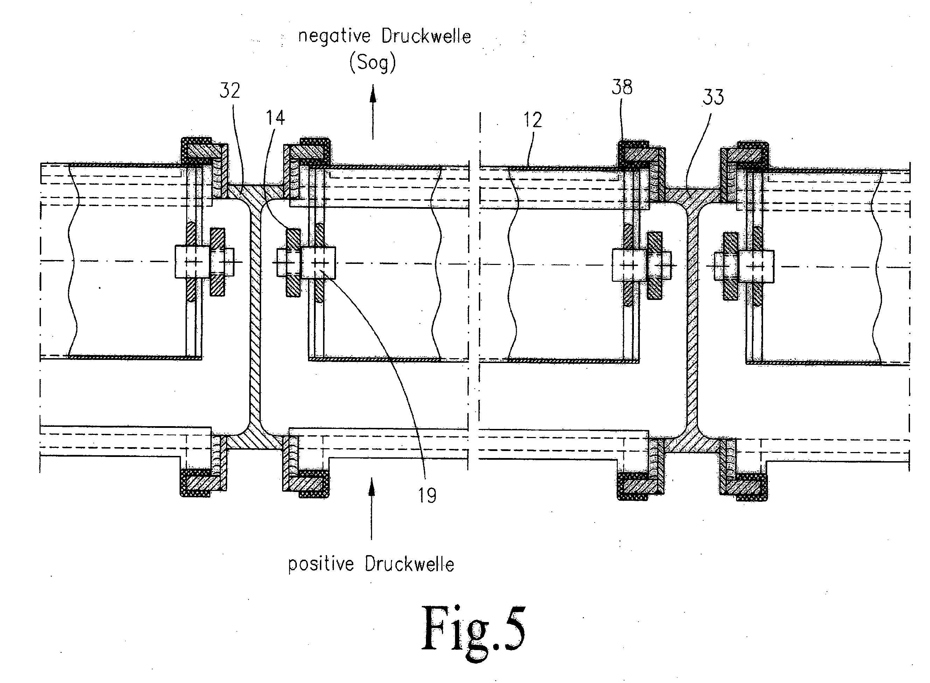

Das Gehäuse 6 hat eine im Wesentlichen rechteckige Form. Bei der in Fig. 3 und 5 dargestellten Ausführungsform sind Doppel-T-förmige Rahmenteile 32, 33 vorgesehen, mit einer Stirnwand 32a bzw. 33a, die einen kleineren Querschnitt hat als der lichte Querschnitt des Gehäuses 6 dadurch, dass ausgehend von dem Doppel-T-förmigen Rahmen 32a bzw. 33a das Gehäuse durch eine etwa L-förmige Erweiterung 32b bzw. 33b nach außen erweitert ist, um die Pendelbewegung der Verschlusseinrichtung 12 aus der mittigen Ruheposition in Richtung auf die Öffnungen 8, 9 zu ermöglichen gegenüber den kleiner gehaltenen Strinwänden 32a, 33a des Gehäuses. Gegenüber der Mittelachse sind die Erweiterungen 32b, 33b auf beiden Seiten gegenüber den Öffnungen 8, 9 vorgesehen. Durch die Doppel-T-förmigen Rahmenteile 32, 33 lässt sich eine platzsparende Nebeneinanderschaltung mehrerer Druckstoßklappen ermöglichen.

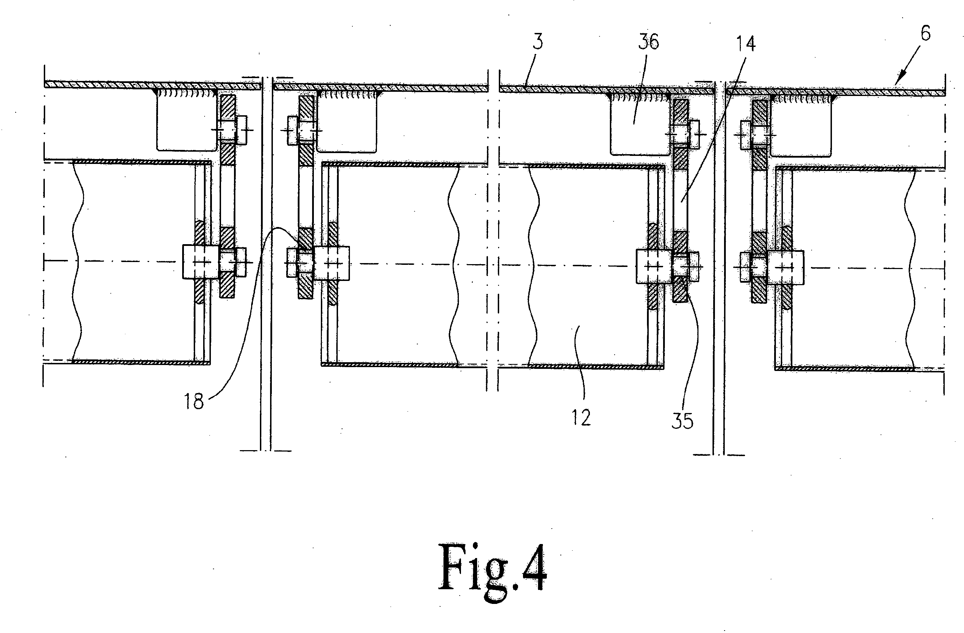

Die an den Stirnseiten der Verschlusseinrichtungen 12 vorgesehenen Bolzen 19 dienen gemäß vorstehender Beschreibung zur Lagerung gegenüber den Pendelstangen. Wie Fig. 4 und 5 zeigen, sind die Bolzen 19 mit einer umlaufenden Nut 35 versehen, mittels welcher der Bolzen 19 in die Öffnung 18 jeder Pendelstange 14, 15 eingreift und gegenüber der Pendelstange 14, 15 geführt gelagert ist. Jede Pendelstange 14, 15 ist durch nicht im Detail gezeigte Befestigungsmittel 16, beispielsweise in Form von Verbindungsbolzen, gegenüber einer mittig im Gehäuse 6 angeordneten weiteren Befestigungslasche 36 schwenkbar gelagert.

Fig. 4 zeigt eine Teilansicht von Druckstoßklappen mit der zylindrischen Verschlusseinrichtung 12 in Verbindung mit einem Teil des Gehäuses 6. Die Kanten, welche die schlitzförmigen Öffnungen 8, 9 festlegen, sind mit einem Dichtungsstreifen, vorzugsweise aus Silicon, belegt, wodurch eine luftdichte Abdichtung beispielsweise in dem in Fig. 2 gezeigten Zustand zwischen der Verschlusseinrichtung 12 und der Öffnung 5 sichergestellt ist. Der Dichtungsstreifen ist in Fig. 4b mit 38 angedeutet und vorzugsweise hinsichtlich beider Öffnungen 8, 9 vorgesehen.

Wie aus den Fig. 1 bis 5 hervorgeht, können die Druckstoßklappen sowohl seriell übereinander und/oder seriell nebeneinander vorgesehen sein.

Die Gehäuse 6 bilden gemäß vorliegender Erfindung aus stählernen Rahmen aus T- bzw. Doppel-T-förmigen Profilen zusammengesetzte Hohlräume, innerhalb welcher jeweils eine vorteilhafterweise zylindrische Verschlusseinrichtung 12 pendelnd aufgehängt ist und je nach Belastungsrichtung auf die Öffnung 8 oder auf die Öffnung 9 schwingen kann, um die betreffende Öffnung zu verschließen, so dass kein Medium, wie Luft, hindurchgelassen wird. Die Federeinrichtungen 20, 21, welche die Verschlusseinrichtung 12 stabil in dem Zustand nach Fig. 1 halten, sind gegenüber dem Gehäuse 6 bzw. der Verschlusseinrichtung 12 schräg gestellt. Mit dieser Gestaltung ist sichergestellt, dass bei einer Druckwelle, die üblicherweise pulsiert, ein Abschluss sowohl bei einer positiven Druckkomponente als auch bei einer negativen Druckkomponente (Sog) erreicht wird. Die erfindungsgemäße Druckstoßklappe wirkt somit als Ventil sowohl bei einer Druckwelle wie auch bei einer Sogwelle, indem die Verschlusseinrichtung 12 in der jeweils richtigen Richtung durch Pendeln eine luftabschließende Position erreichen kann.

Die erfindungsgemäße Druckstoßklappe soll vorzugsweise bis zum einem Druck von 2 bar, kurzfristig bis 3 bar, einen luftdichten Abschluss gewährleisten. Durch Versuche wurde festgestellt, dass bei einem Druckanstieg in 300 ms bei einem Druck von 0,2 ein luftdichter Verschluss erreicht wird. Bei einer Breite von etwa 1500 mm und einer Höhe von 1000 mm der Druckstoßklappe beträgt der Volumenstrom pro Druckstoßklappeneinheit mit einer Länge von 1000 mm V = 4 m/s. Der Druckverlust beträgt bei einer Druckstoßklappe mit den vorgenannten Dimensionierungen 200 Pa.

## Patentansprüche

1. Druckstoßklappe, insbesondere zum Einsatz in oder an Gebäudewandöffnungen,
mit einem Gehäuse (6), welches etwa zueinander fluchtende Öffnungen (8, 9) aufweist, mit einer im Gehäuse zwischen den Öffnungen (8, 9) befindlichen Einrichtung (12), die in Axialrichtung des Gehäuses (6) durch eine federelastische Lagereinrichtung (14, 15, 20, 21) verstellbar gelagert ist,
**dadurch gekennzeichnet, dass** die Öffnungen (8, 9) in einander gegenüberliegenden Wandungen ausgebildet sind,
dass die Einrichtung (12) aus einem Ventilkörper (12) besteht, der durch Pendelstangen (14, 15) innerhalb des Gehäuses (6) gelagert ist,
dass die federelastische Lagereinrichtung (14, 15, 20, 21) durch zwei Federeinrichtungen (20, 21) gebildet ist, die an jeder Pendelstange (14, 15) einerseits und an dem Gehäuse (6) andererseits befestigt sind und
dass der Ventilkörper (12) innerhalb des Gehäuses (6) durch die Pendelstangen (14, 15) schwenkbar gelagert ist, so dass er voll auf einer der Öffnungen (8, 9) aufsitzen kann zum Verschließen einer der Öffnungen (8, 9).

2. Druckstoßklappe nach Anspruch 1,
**dadurch gekennzeichnet,**
**dass** der Ventilkörper (12) an seinen Stirnseiten mit den Pendelstangen (14, 15) verbunden ist.

3. Druckstoßklappe nach Anspruch 1 oder 2,
**dadurch gekennzeichnet,**
**dass** die Öffnungen (8, 9) schlitzförmig ausgebildet sind.

4. Druckstoßklappe nach einem der vorangehenden Ansprüche,
**dadurch gekennzeichnet,**
**dass** der Ventilkörper (12) aus einem zylindrischen oder elliptischen Ventilkörper besteht.

5. Druckstoßplatte nach einem der Ansprüche 1 bis 3,
**dadurch gekennzeichnet,**
**dass** der Ventilkörper (12) zumindest zwei gekrümmte, den Öffnungen (8, 9) zugeordnete Flächen (12a, 12b) aufweist.

6. Druckstoßplatte nach wenigstens einem der vorangehenden Ansprüche,
**dadurch gekennzeichnet,**
**dass** die Öffnungen (8, 9) in den Gehäusewandungen über eine Länge vorgesehen sind, die kürzer ist als die axiale Länge des Ventilkörpers (12).

7. Druckstoßklappe nach einem der vorangehenden Ansprüche,
**dadurch gekennzeichnet,**
**dass** die Höhe der Öffnungen (8, 9) in den Gehäusewandungen kleiner ist als die Höhe bzw. der Durchmesser des Ventilkörpers (12).

8. Druckstoßklappe nach wenigstens einem der vorangehenden Ansprüche,
**dadurch gekennzeichnet,**
**dass** die Verschlusseinrichtung (12) stirnseitig mittig einen Befestigungsbolzen (19) aufweist, der mit einem Ende der jeweiligen Pendelstange (14, 15) in Eingriff steht.

9. Druckstoßklappe nach wenigstens einem der vorangehenden Ansprüche,
**dadurch gekennzeichnet,**
**dass** der Bewegungsweg des Ventilkörpers (12) auf einem Kreisbogen (13) liegt.

10. Druckstoßklappe nach wenigstens einem der vorangehenden Ansprüche,
**dadurch gekennzeichnet,**
**dass** entlang der Öffnungen (8, 9) Dichtungsbänder (38) vorgesehen sind.

11. Verwendung der Druckstoßklappe nach wenigstens einem der vorangehenden Ansprüche in oder an Gebäudewandöffnungen,
**dadurch gekennzeichnet,**
**dass** mehrere Druckstoßklappen seriell übereinander und/oder nebeneinander vorgesehen sind, wobei zur Verbindung der Druckstoßklappen Doppel-T-förmige Rahmenteile (1, 2, 3) vorgesehen sind.

## Claims

1. Pressure surge valve, in particular for use in or on building wall openings, comprising a housing (6), which has approximately mutually flush openings (8, 9), comprising a device (12), which is located in the housing between the openings (8, 9) and is mounted by way of a resilient mounting device (14, 15, 20, 21) so as to be adjustable in the axial direction of the housing (6),
**characterised in that** the openings (8, 9) are formed in mutually opposite walls,
**in that** the device (12) consists of a valve body (12) which is mounted within the housing (6) by way of pendulum rods (14, 15),
**in that** the resilient mounting device (14, 15, 20, 21) is formed by two spring devices (20, 21) which are fixed to each pendulum rod (14, 15) on the one hand and to the housing (6) on the other hand, and
**in that** the valve body (12) is mounted so as to be pivotable within the housing (6) by way of the pendulum rods (14, 15), in such a way that it can be positioned fully on one of the openings (8, 9) to seal one of the openings (8, 9).

2. Pressure surge valve according to claim 1, **characterised in that** the end faces of the valve (12) are connected to the pendulum rods (14, 15).

3. Pressure surge valve according to either claim 1 or claim 2, **characterised in that** the openings (8, 9) are formed slit-shaped.

4. Pressure surge valve according to any of the preceding claims, **characterised in that** the valve body (12) consists of a cylindrical or elliptical valve body.

5. Pressure surge according to any of claims 1 to 3, **characterised in that** the valve body (12) has at least two curved faces (12a, 12b), assigned to the openings (8, 9).

6. Pressure surge valve according to at least one of the preceding claims, **characterised in that** the openings (8, 9) in the housing walls are provided over a length which is shorter than the axial length of the valve body (12).

7. Pressure surge valve according to any of the preceding claims, **characterised in that** the height of the openings (8, 9) in the housing walls is less than the height or diameter of the valve body (12).

8. Pressure surge valve according to at least one of the preceding claims, **characterised in that**, at the centre of an end face, the sealing device (12) has a fastening bolt (19), one end of which is engaged with the respective pendulum rod (14, 15).

9. Pressure surge valve according to at least one of the preceding claims, **characterised in that** the movement path of the valve body (12) is on a circle arc (13).

10. Pressure surge valve according to at least one of the preceding claims, **characterised in that** sealing strips (38) are provided along the openings (8, 9).

11. Use of the pressure surge valve according to at least one of the preceding claims in or on building wall openings, **characterised in that** a plurality of pressure surge valves are provided in series above one another and/or side by side, double-T-shaped frame parts (1, 2, 3) being provided for connecting the pressure surge valves.

## Revendications

1. Clapet anti-bélier, en particulier pour l'utilisation dans ou sur des ouvertures de paroi de bâtiment, comportant un boîtier (6), qui présente des ouvertures (8, 9) approximativement alignées entre elles, comportant un dispositif (12) situé dans le boîtier entre les ouvertures (8, 9), qui est monté de manière réglable dans la direction axiale du boîtier (6) au moyen d'un moyen de montage élastique (14, 15, 20, 21), **caractérisé par le fait que** les ouvertures (8, 9) sont réalisées dans des parois opposées entre elles,
que le moyen (12) est constitué d'un corps de valve (12), qui est monté au moyen de tiges pendulaires (14, 15) à l'intérieur du boîtier (6),
que le moyen de montage élastique (14, 15, 20, 21) est formé par deux moyens élastiques (20, 21), qui sont fixés à chaque tige pendulaire (14, 15) d'un côté et au boîtier (6) d'un autre côté, et
que le corps de valve (12) est monté pivotable à l'intérieur du boîtier (6) au moyen des tiges pendulaires (14, 15), de telle sorte qu'il peut reposer entièrement sur une des ouvertures (8, 9) pour la fermeture d'une des ouvertures (8, 9).

2. Clapet anti-bélier selon la revendication 1, **caractérisé par le fait que** le corps de valve (12) est raccordé au niveau de ses faces avant aux tiges pendulaires (14, 15).

3. Clapet anti-bélier selon la revendication 1 ou 2, **caractérisé par le fait que** les ouvertures (8, 9) sont réalisées sous forme de fentes.

4. Clapet anti-bélier selon l'une quelconque des revendications précédentes, **caractérisé par le fait que** le corps de valve (12) est constitué d'un corps de valve cylindrique ou elliptique.

5. Clapet anti-bélier selon l'une des revendications 1 à 3, **caractérisé par le fait que** le corps de valve (12) présente au moins deux surfaces (12a, 12b) incurvées associées aux ouvertures (8, 9).

6. Clapet anti-bélier selon au moins l'une quelconque des revendications précédentes, **caractérisé par le fait que** les ouvertures (8, 9) dans les parois de boîtier sont prévues sur une longueur qui est inférieure à la longueur axiale du corps de valve (12).

7. Clapet anti-bélier selon l'une quelconque des revendications précédentes, **caractérisé par le fait que** la hauteur des ouvertures (8, 9) dans les parois de boîtier est inférieure à la hauteur ou au diamètre du corps de valve (12).

8. Clapet anti-bélier selon au moins l'une quelconque des revendications précédentes, **caractérisé par le fait que** le moyen de fermeture (12) présente sur la face avant de manière centrée un boulon de fixation (19), qui se trouve en prise sur une extrémité de la tige pendulaire (14, 15) respective.

9. Clapet anti-bélier selon au moins l'une quelconque des revendications précédentes, **caractérisé par le fait que** la trajectoire du corps de valve (12) se trouve sur un arc de cercle (13).

10. Clapet anti-bélier selon au moins l'une quelconque des revendications précédentes, **caractérisé par le fait que** des bandes d'étanchéité (38) sont prévues le long des ouvertures (8, 9).

11. Utilisation du clapet anti-bélier selon au moins l'une quelconque des revendications précédentes dans ou sur des ouvertures de paroi de bâtiment, **caractérisé par le fait que** plusieurs clapets anti-bélier sont prévus en série les uns sur les autres et/ou côte à côte, des éléments de cadre (1, 2, 3) en forme de double T étant prévus pour le raccordement des clapets anti-bélier.
